# EUROPEAN PATENT APPLICATION

(11) **EP 1 491 766 A1**
(43) Date of publication of application: **29.12.2004**
(21) Application number: 03743530.2
(22) Date of filing: 28.02.2003
(51) Int. Cl.: F03D 3/00

(54) **VERTICAL AXIS WINDMILL**

(30) Priority: 01.03.2002 JP 2002055328
(71) Applicant: EBARA CORPORATION, Ohta-ku, Tokyo 144-8510 (JP)
(72) Inventor: KIMURA, Katsumi, c/o EBARA CORPORATION, Tokyo 144-8510 (JP); ANDO, Yoshihiko, c/o EBARA CORPORATION, Tokyo 144-8510 (JP); IMAFUKU, Masaaki, c/o EBARA CORPORATION, Tokyo 144-8510 (JP); MARUTA, Yoshiyuki, c/o EBARA RESEARCH CO., LTD., Fujisawa-shi, Kanagawa 251-0875 (JP); GOTO, Masanori, c/o EBARA RESEARCH CO., LTD., Fujisawa-shi, Kanagawa 251-0875 (JP); HIRATA, Kazuya, c/o EBARA RESEARCH CO., LTD., Fujisawa-shi, Kanagawa 251-0875 (JP); ICHIHARA, Kenji, c/o EBARA CORPORATION, Tokyo 144-8510 (JP); SUGIYAMA, Kazuhiko, c/o EBARA CORPORATION, Tokyo 144-8510 (JP); SAKURAI, Kimi, c/o EBARA CORPORATION, Tokyo 144-8510 (JP); SUZUKI, Yukio, c/o EBARA CORPORATION, Tokyo 144-8510 (JP)
(74) Representative: Wagner & Geyer
(86) International application number: PCT/JP2003/002360
(87) International publication number: WO 2003/074868

(57) **Abstract**

A vertical shaft windmill is provided in which: a casing (7) extends further upward than a lowest arm (5L); a radial bearing (BI) is fixed to the outer part of the casing (7); and the arm (5L) is mounted for rotation to the casing (7) through the radial bearing (BI). Unstable conditions in the overhang region can be eliminated without decreasing its wind receiving area and without interference with other members.

## Description

### Technical Field

This invention relates to a vertical shaft windmill with its rotary shaft directed generally perpendicular to an air flow (wind), such as a Darius type windmill.

### Background Art

The rotary shaft of a vertical shaft windmill extends in the vertical direction. In the vertical shaft windmill, the rotary shaft is supported by a thrust bearing at its lowermost portion, and by a radial bearing thereabove.

Here, in order for the rotary shaft as a rotary body to be supported by a radial bearing, the radial bearing should be fixed to a casing as a fixed member.

Hitherto, the radial bearing was provided in a region covered with the casing. The radial bearing provided inside the casing supports the rotary shaft with its inner race, having its outer race fixed to the casing. The casing covers the region below arms connecting the blade and the rotary shaft, so that interference with the arms is avoided.

Here, in a region not covered with the casing (the region above the casing), or a so-called "overhang region," the rotary shaft is not supported by the radial bearing.

However, in the overhang region where the rotary shaft is not supported by the radial bearing, the vertically extending rotary shaft can be unstable. In such a case (where the rotary shaft becomes unstable), the rotary shaft will "swing" or make a precession, which might cause interference of the blade and arms with other members or equipment.

In addition, this results in a load concentration on the uppermost radial bearing and there is a danger of damaging the uppermost radial bearing.

On the other hand, if the overhang portion is shortened, the foregoing unstable condition is improved. However, the length of the blade also is shorter and its wind receiving area for the rotation is decreased as well, hindering the fundamental function as a windmill.

In view of the foregoing problems in the prior art, an object of this invention is to provide a vertical shaft windmill capable of eliminating unstable conditions in the overhang region without decreasing the wind receiving area and without interference with other members.

### Disclosure of Invention

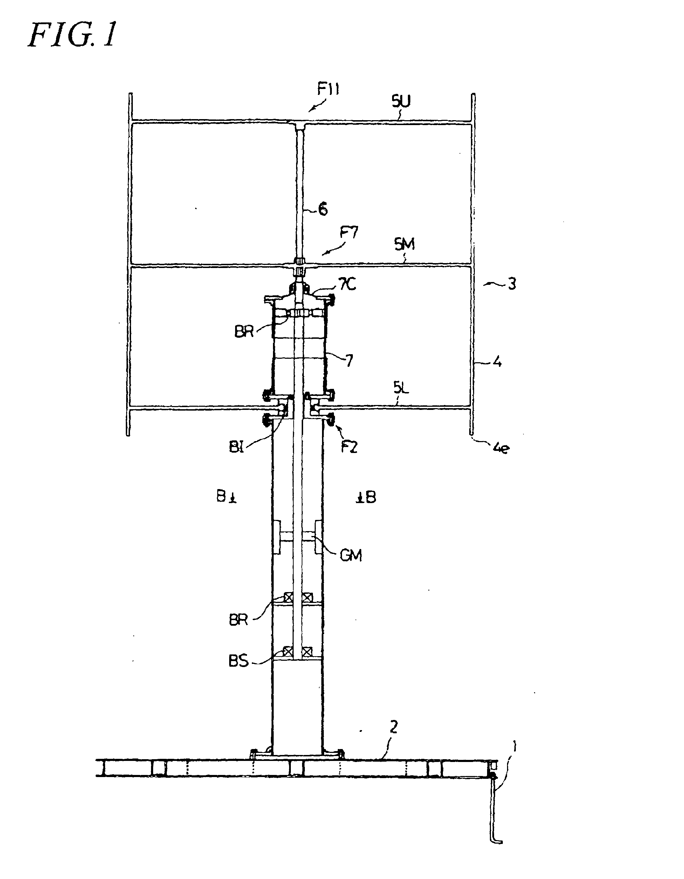

The object of this invention is to provide a vertical shaft windmill as shown for example in Fig. 1-Fig. 5, comprising: a blade 4 for receiving a wind to obtain rotational force; a plurality of arms 5L, 5M, 5U disposed in vertical relation for supporting the blade 4; a rotary shaft 6 disposed vertically for receiving the rotational force of the blade 4 through the arms 5M, 5U; a casing 7 for housing the rotary shaft 6, extending further upward than the lowest arm 5L of the plurality of arms 5L, 5M, 5U; and a radial bearing BI fixed to the outer part of the casing 7 for rotatably mounting the lowest arm 5L to the casing 7.

In this arrangement, since there are provided a casing for housing the rotary shaft, extending further upward than the lowest arm of the plurality of arms, and a radial bearing fixed to the outer part of the casing for mounting the lowest arm to the casing for rotation, unstable conditions of the blade and the rotary shaft can be eliminated without decreasing the wind receiving blade area.

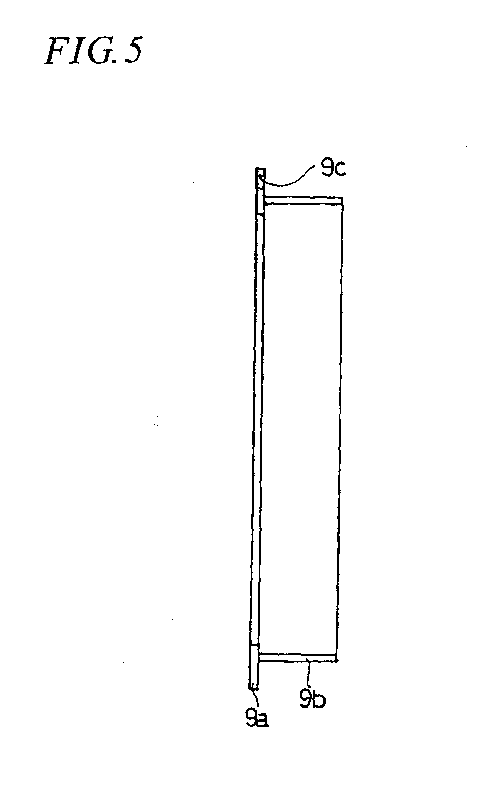

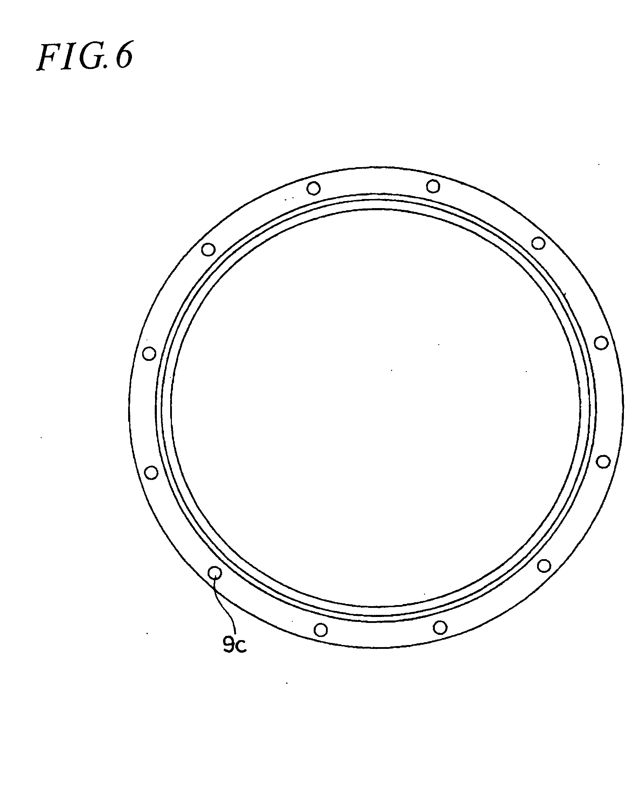

The vertical shaft windmill 3 may, as shown for example in Fig. 5 and Fig. 6, comprise a cover member 9 disposed radially outwardly at an exterior of the radial bearing BI.

In this arrangement, since a cover member 9 disposed radially outwardly at an exterior of the radial bearing BI is provided, possible rust generation in the radial bearing or ingress of foreign matters into the bearing can be prevented.

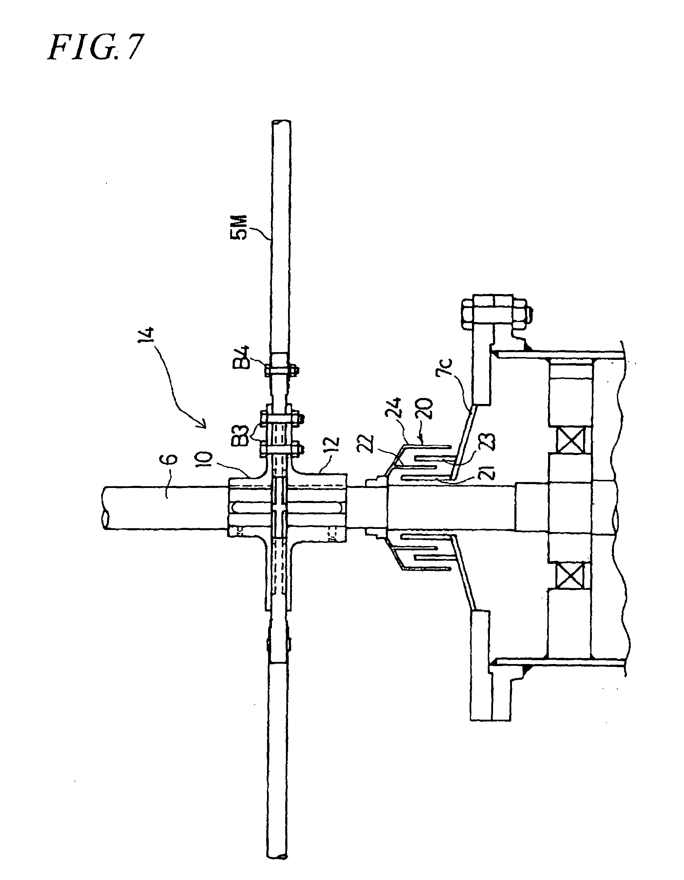

The vertical shaft windmill 3 may, as shown for example in Fig. 7, Fig. 8 and Fig. 9, further comprise an arm connecting member 10 placed between the radial bearing BI and the arms 5M, 5U and formed with a recess 10e having a taper of larger radial inside and smaller radial outside; and radially inner end of the arm 5M, 5U may be formed in the shape complementary to the recess 10e.

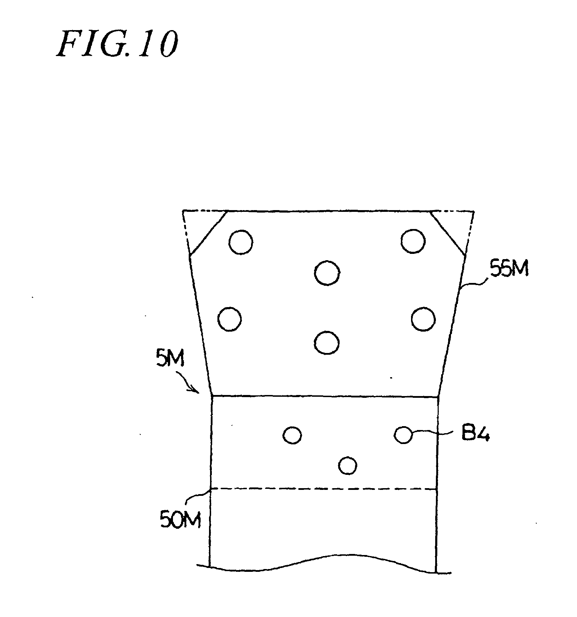

Further, in the vertical shaft windmill 3, as shown for example in Fig. 10, the arm 5L, 5M, 5U may be formed hollow and comprise a reinforcement member 55M made of a light material, with a specific gravity of no larger than 3.0, different from that of the arm 5L, 5M, 5U and disposed at the radially inner end of the arm 5L, 5M, 5U, partly inserted in the arm 5L, 5M, 5U (or the arm body).

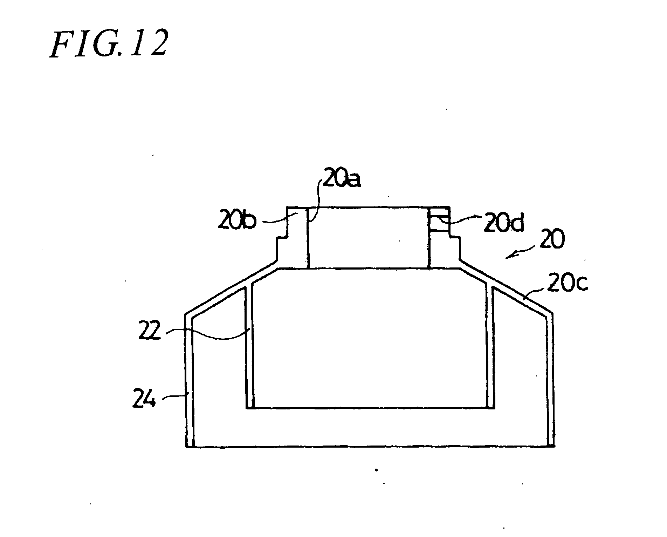

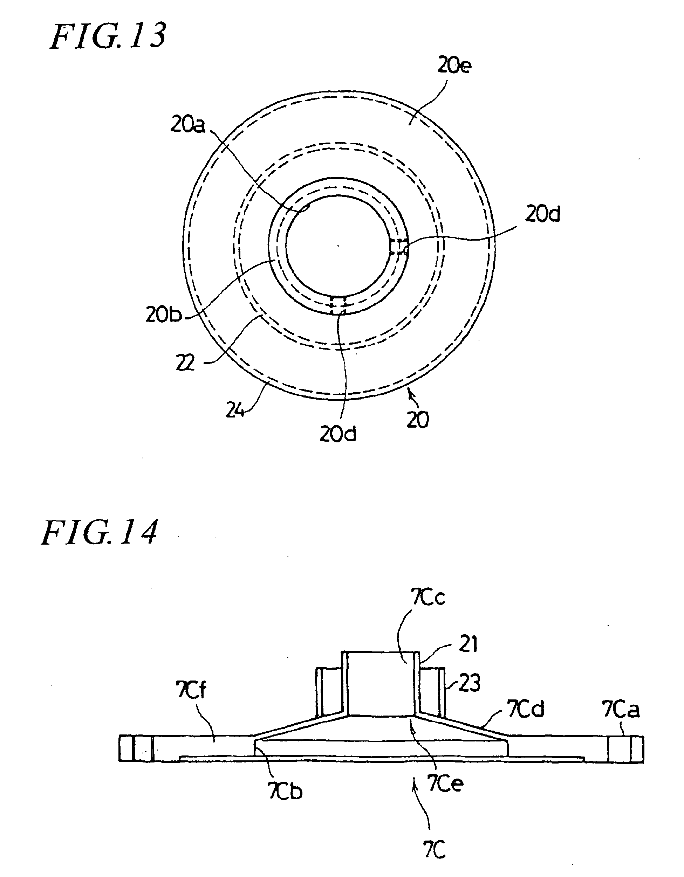

Further, the vertical shaft windmill 3 may as shown for example in Fig. 12 and Fig. 13, comprise a lid-like member 20 covering the uppermost end 7C of the casing 7; and a labyrinthine structure may be constituted at a portion covered with the lid-like member.

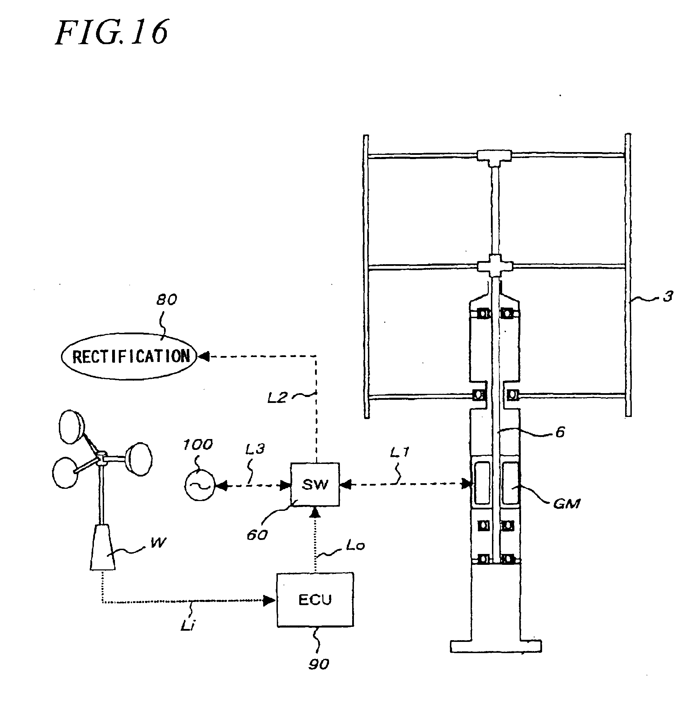

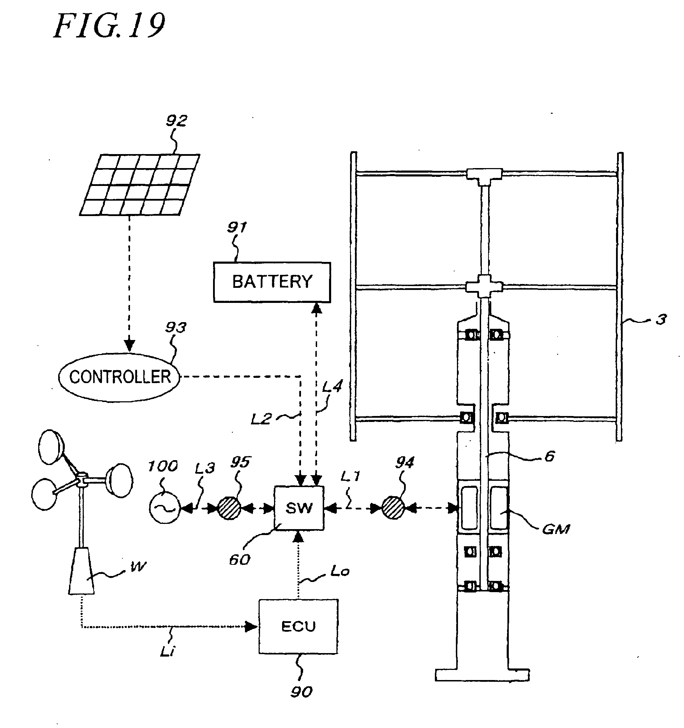

Further, the above vertical shaft windmill may as shown for example in Fig. 16 and Fig. 19, comprise a generator GM driven by the rotational force of the rotary shaft 6; and the rotary shaft 6 may be constituted integrally with a rotary shaft of the generator GM.

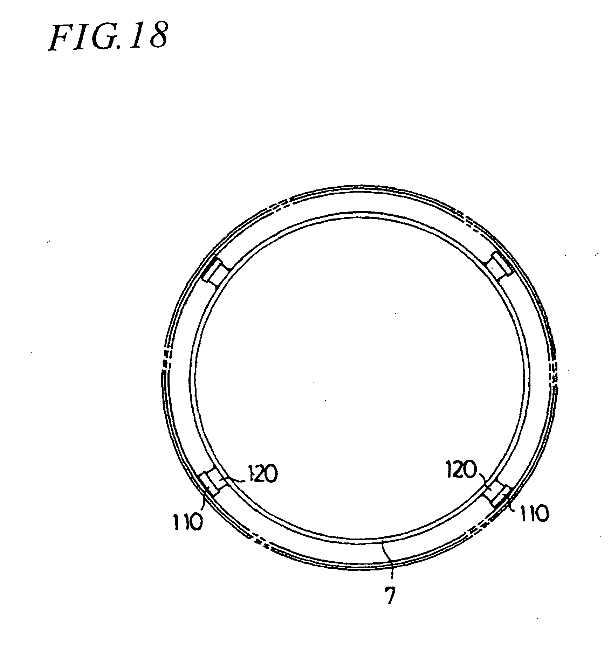

Further, as shown for example in Fig. 18, the vertical shaft windmill may comprise a solar battery panel 110 mounted on the outside circumference of the casing 7.

Further, as shown for example in Fig. 16 and Fig. 19, the generator GM may be adapted to operate also as a motor, and may be adapted to: supply electric power to a commercial power source when operating as a generator; and be supplied from the commercial power source when operating as a motor.

Further, as shown for example in Fig. 19, the generator may be adapted to: be supplied with electric power from a battery when operating as a motor; and store electric power in the battery so as to supply electric power from the battery to a commercial power source or as in-house electric power, as required, when operating as a generator.

The basic Japanese Patent Application No. 2002-055328 filed on March 1, 2002 is hereby incorporated in its entirety by reference into the present application.

The present invention will become more fully understood from the detailed description given hereinbelow. However, the detailed description and the specific embodiment are illustrated of desired embodiments of the present invention and are described only for the purpose of explanation. Various changes and modifications will be apparent to those ordinary skilled in the art on the basis of the detailed description.

The applicant has no intention to give to public any disclosed embodiment. Among the disclosed changes and modifications, those which may not literally fall within the scope of the patent claims constitute, therefore, a part of the present invention in the sense of doctrine of equivalents.

### Brief Description of Drawings

Fig. 1 is a front sectional view of a Darius type windmill to which this invention is applied.
Fig. 2 is an enlarged view of a portion designated by the symbol F2 of Fig. 1.
Fig. 3 is a plan view of a lower arm connection and bearing support member of the embodiment of this invention.
Fig. 4 is a sectional view taken along the line A-A of Fig. 3.
Fig. 5 is a sectional view of a cover member of the embodiment of this invention.
Fig. 6 is a plan view corresponding to Fig. 5.
Fig. 7 is an enlarged view of a portion designated by the symbol F7 of Fig. 1.
Fig. 8 is a plan view of an upper coupling of the embodiment of this invention.
Fig. 9 is a sectional view taken along the line C-C of Fig. 8.
Fig. 10 is a plan view of the radially inner end of a lower arm of the embodiment of this invention.
Fig. 11 is an enlarged view of a portion designated by the symbol F11 of Fig. 1.
Fig. 12 is a vertical sectional view of a lid-like member of the embodiment of this invention.
Fig. 13 is a plan view corresponding to Fig. 12.
Fig. 14 is a vertical sectional view of the uppermost end of a casing of the embodiment of this invention.
Fig. 15 is a plan view corresponding to Fig. 14.
Fig. 16 is a structural block diagram of a control device for the changeover between a generator function and a motor function of a generator-motor of the embodiment of this invention.
Fig. 17 is a control flowchart showing a control method for the changeover between the generator function and the motor function of the generator-motor of the embodiment of this invention.
Fig. 18 is a sectional view taken along the line B-B of Fig. 1.
Fig. 19 is a structural block diagram of a control device for the changeover between a generator function and a motor function of a generator-motor of another embodiment of this invention.

### Best Mode for Carrying Out the Invention

Now, an embodiment of this invention will be described with reference to the accompanying drawings.

In Fig. 1, a Darius type windmill 3 of the vertical shaft windmill is disposed on a base 2 fixed firmly to the ground foundation by an anchor 1.

In the Darius type windmill 3, a blade 4 receiving a wind for the rotational force is supported on a rotary shaft 6 and a casing 7 with a plurality of arms (in the illustration, they are provided in three tiers of upper, middle and lower ones: an upper arm is designated by symbol 5U, a middle arm by symbol 5M, and a lower arm by symbol 5L).

Here, in a conventional vertical shaft windmill, the rotary shaft is supported inside the casing radially by radial bearings and axially by a lowermost thrust bearing.

In addition, in a conventional bearing, to avoid interference of the casing with the arms, the casing is arranged such that it surrounds a region below the lowest arm (the lower arm 5L, for example, in Fig. 1); and the casing is by no means located above the lowest arm (the lower arm).

On the contrary, in the embodiment shown in the figure, with the help of an inner-race-fixed radial bearing BI and the surrounding structure, the casing 7 extends to a region above the lowest arm, or the lower arm 5L, and the overhang (portion not covered by the casing 7) is smaller accordingly.

That is, since with the help of the inner-race-fixed radial bearing BI and the surrounding structure described below, the lower arm 5L is supported for rotation to the casing 7, interference of the lower arm 5L with the casing 7 is prevented.

In addition, as a result of the interference of the lower arm 5L with the casing 7 being prevented, the casing 7 is allowed to extend to the region above the lower arm 5L near the middle arm 5M, so that the uppermost radial bearing BR can also be provided at a position near the middle arm 5M.

As a result, the "overhang," or the region where the rotary shaft extends further upward than the uppermost radial bearing BR can be shortened by the distance to the radial bearing BI of the lower arm 5L, improving stability of the whole vertical shaft windmill 3.

In Fig. 1, symbol BS designates a thrust bearing disposed at the lower end of the rotary shaft 6 for supporting a downward load for smooth rotation.

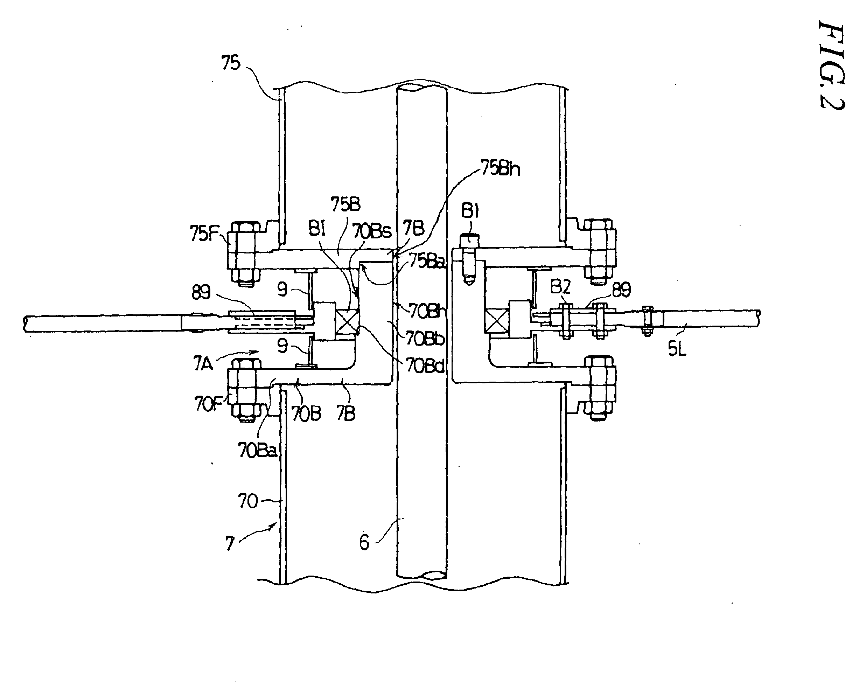

Now, the inner-race-fixed radial bearing BI and the surrounding structure will be described with reference to Fig. 2-Fig. 6, in addition.

As is clear from Fig. 1 and Fig. 2 (partial enlarged view of the inner-race-fixed radial bearing BI and its surroundings), and especially from Fig. 2, in the region where the lower arm 5L extends in the radial direction, the casing 7 has the shape of being recessed radially inwardly, and in the recessed portion 7A of the casing 7 is provided an inner-race-fixed radial bearing mounting member 7B formed in a ring-like and recessed shape as a whole.

The inner-race-fixed radial bearing BI is provided on the outer side of the inner-race-fixed radial bearing mounting member 7B. Here, the inner-race-fixed radial bearing mounting member 7B constitutes a part of the casing 7; the inner-race-fixed radial bearing BI is disposed externally on the casing; and the inner race of the inner-race-fixed radial bearing BI is fixed to the inner-race-fixed radial bearing mounting member 7B constituting a part of the casing 7.

Further, the inner-race-fixed radial bearing mounting member 7B will be described in detail, as well as a mounting procedure of the inner-race-fixed radial bearing BI.

The casing 7 is comprised of a lower casing 70 located below the lower arm 5L and an upper casing 75 located above the lower arm 5L.

A lower connection flange 70F is fixed to the upper end of the lower casing 70, and an upper connection flange 75F to the lower end of the upper casing 75.

The inner-race-fixed radial bearing mounting member 7B is constituted by a lower flange 70B and an upper flange 75B.

The lower flange 70B is comprised of a flange portion 70Ba, and a cylindrical boss 70Bb formed with a through hole 70Bh for the rotary shaft 6 to pass. The boss 70Bb is formed with a stepped portion 70Bd having a small diameter portion 70Bs and a large diameter portion at the outside circumference. The small diameter portion 70Bs is inserted in the inner race of the inner-race-fixed radial bearing BI in an intermediate fitting relation, for example.

On the other hand, the upper flange 75B is formed, centrally, with a through hole 75Bh for the rotary shaft 6 to pass, and provided, centrally on the lower side, with a stepped hole 75Ba into which an end (small diameter portion 70Bs) of the boss 70Bb of the lower flange 70B is fitted.

In the end face of the boss 70Bb of the lower flange 70B and around the through hole 75 Bh of the upper flange 75B are provided attachment holes for attaching the flanges each other with bolts B1, so that they are assembled together as an inner-race-fixed radial bearing mounting member 7B.

In order to fix the inner-race-fixed radial bearing BI (assembled) to the inner-race-fixed radial bearing mounting member 7B, first insert, into the inner race of the inner-race-fixed radial bearing BI assembled to the lower arm 5L using the method described later, the small diameter portion 70Bs of the boss 70Bb of the lower flange 70B temporarily secured to the lower connection flange 70F of the lower casing 70, with the rotary shaft 6 inserted in the through hole 70 Bh.

Then, fit the small diameter portion 70Bs of the boss 70Bb of the lower flange 70B into the inner portion of the upper flange 75B. After the fitting, bring the end face of the small diameter portion 70Bs into abutment against the bottom of the stepped hole 75 Ba portion of the upper flange 75B.

When the bolts B1 are fastened, with both parts in abutment against each other, the lower flange 70B and the upper flange 75B are joined together to be assembled as the inner-race-fixed radial bearing mounting member 7B.

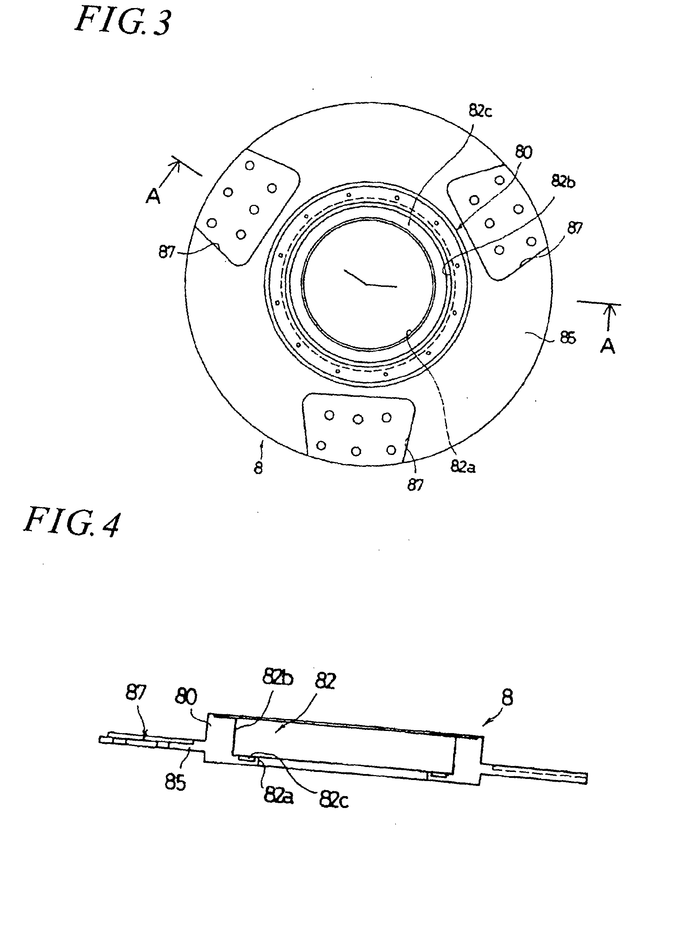

With reference to Fig. 3 and Fig. 4, a lower arm connection and bearing support member (hereinafter abbreviated as connection and support member) 8 will be described.

The connection and support member 8 includes a cylindrical bearing support boss 80 having a stepped hole 82 formed of a small hole 82a and a large hole 82b, and a lower arm connection flange 85 extending radially outwardly from the outside circumference of the bearing support boss 80.

The stepped hole 82 receives the inner-race-fixed radial bearing BI to be fitted therein to support the bearing.

The lower arm connection flange 85 extends radially from the outside circumference of the bearing support boss 80, having a plurality (three in the figure) of recesses 87, each having a taper of larger radial inside and smaller radial outside, formed radially from the center of the boss 80 at regular (equal) angular intervals on the same side as that on which the large hole 82b of the bearing support boss 80 opens.

The radially innermost end of the lower arm 5L (described later) in the shape complementary to the recess 87 is fitted in the recess 87, and the lower arm connection flange 85 and an arm locking member 89 (see Fig. 2) are connected with fastening bolts B2 (see Fig. 2) such that the innermost end of the lower arm 5L is held therebetween.

A ring-like grease groove designated by reference numeral 82c in Fig. 4, when filled with grease, serves as means for maintaining lubrication of the inner-race-fixed radial bearing fitted in the stepped hole 82.

The construction shown in Fig. 2-Fig. 4 allows the lower arm 5L designed for rotation to be supported for rotation on the casing 7 (7B) not designed for rotation, by the inner-race-fixed radial bearing BI.

Referring to Fig. 2 again, the outline of a cover member (cover for preventing ingress of foreign matters) 9 extending vertically near the inner-race-fixed radial bearing BI thereabove and therebelow, will be described.

The cover member 9 is preferably made of material of a high weather resistance and a low aging deterioration; and in the embodiment illustrated, it is made of a metal. However, plastics, hard rubbers and the like may be used.

Attention should be paid to the following points in installing the cover member 9.

The region from the lower arm 5L to the outer race of the inner-race-fixed radial bearing BI (lower arm 5L and connection and support member 8) rotates about the axis of the rotary shaft 6. There is preferably no contact resistance between the cover member 9, and the lower arm 5L and connection and support member 8. Therefore, in the illustrated embodiment, a small clearance is provided between the tip of the cover, and the lower arm 5L and connection and support member 8 (non-contact).

However, if the contact resistance is relatively small, the cover member 9 (for example, constituted of a diaphragm) may be in contact with the lower arm 5L and connection and support member 8.

The cover member 9 will be described in detail with reference to Fig. 5 and Fig. 6. The two, upper and lower cover members 9 shown in Fig. 2 are of the same shape.

The cover member 9, as shown in Fig. 5, is comprised of a ring-like flange portion 9a having a plurality of mounting holes 9c, and a cylindrical portion 9b, made of a thin plate, provided on one side of the flange portion 9a.

The inner-race-fixed radial bearing BI would be exposed to the external environment because it is not covered with the casing 7 (7B): however since the cover member 9 is provided, a danger of abrasion due to ingress of foreign matters is completely prevented.

In Fig. 1, the construction described with reference to Fig. 2-Fig. 6 allows the casing 7 to extend to a region near the middle arm M.

In a region above the middle arm 5M, the arms (middle arm 5M and upper arm 5U in Fig. 1) are connected to the rotary shaft 6 by couplings (described below).

In Fig. 7, a coupling 14 is comprised of an upper coupling 10 and a lower coupling 12, and the upper coupling 10 and lower coupling 12 hold the radially inner end of the middle arm 5M therebetween.

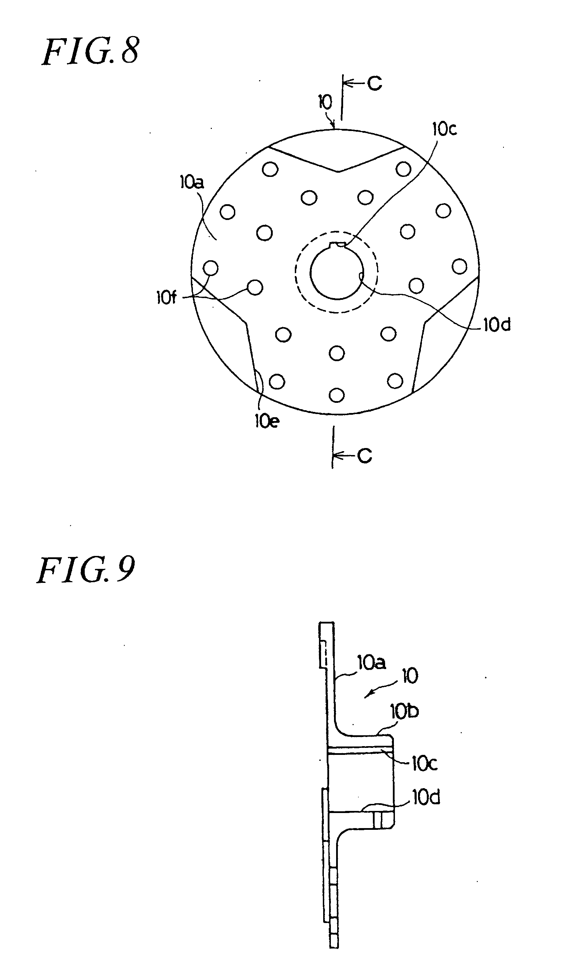

The upper coupling 10 and the lower coupling 12 are of a similar shape, and only the upper coupling 10 will be described more specifically with reference to Fig. 8 and Fig. 9.

As shown in Fig. 8 and Fig. 9, the upper coupling 10 is comprised of a disk-like flange 10a, and a boss 10b provided on one side of the disk-like flange 10a, and the upper coupling 10 is formed, centrally, with an engagement hole 10d having a key slot 10c for engaging the rotary shaft 6.

On the side of the disk-like flange 10a opposite to the side on which the boss 10b is provided are formed a plurality of tapered grooves or recesses 10e. The tape is of a width getting larger from the outside circumference toward the center (radially inwardly) of the disk-like flange 10a.

Although the three recesses provided in the embodiment of Fig. 8 are joined together at the center, they may be formed separately. In a region of the recesses 10e are provided a plurality (six for each mounting portion) of mounting holes 10f along two pitch circles.

The middle arm 5M connected to the upper coupling 10 has its end formed in the shape of a taper such that the width of the mounting end is increased radially inwardly as in the recess 10e.

Therefore, when the tapered end of the middle arm 5M is fitted in the recesses 10e of the upper coupling 10 and the lower coupling 12 (having tapered recesses of the same shape as the recesses 10e of the upper coupling 10) and the middle arm 5M is held between the upper and lower couplings and fastened with fastening bolts and nuts B3, the middle arm 5M is connected by the upper and lower couplings 10, 12. The coupling 14 (assembly of the upper and lower couplings 10, 12) and the rotary shaft 6 are secured to each other by an unillustrated key and the key slot 10c.

Now, with reference to Fig. 10, the construction and shape of the middle arm 5M (the radially inner end among others) will be described. The middle arm 5M is comprised of an arm body 50M, and a reinforcement member 55M located at its radially inner end and adjoining the arm body 50M.

As shown in Fig. 10, in a region of the middle arm 5M near the radially inner end, the portion to be fitted in the recesses 10e of the upper and lower couplings 10, 12 is constituted by the reinforcement member 55M (made of aluminum). The reinforcement member 55M has a radially outwardly extending portion inserted in the arm body 50M in the radially innermost region of the arm body 50M.

A sufficient strength is required to connect the rotary shaft 6 and the thin-walled arm body 50M, and reinforcement with a metallic material rich in tenacity is preferable. On the other hand, weight reduction is required for improvement in the windmill efficiency, so that, aluminum with a small specific gravity is adopted as a material of the reinforcement member 55M in the illustrated embodiment.

Hitherto, there have been arms formed only from FRP, but they have problems in terms of price and delivery time, and if they are formed only from aluminum, another problem is raised of increased total weight.

However, if the construction described with reference to Fig. 10 is adopted, a structure is materialized free from problems in terms not only of price and delivery time but also strength and weight.

Connection between the aluminum reinforcement member 55M and the FRP arm body 50M of thin-walled hollow shape has sufficient strength only with adhesive applied to the connecting portions; however, in the illustrated embodiment, they are joined together with reamer bolts B4 for improvement in safety (for the prevention of separation of aluminum and FRP).

Here, mounting holes are provided in the connecting section of the reinforcement member 55M and arm body 50M such that the reamer bolts B4 are disposed in a staggered relation. If the reamer bolts B4 are disposed in a row, the FRP arm body 50M of thin-walled hollow shape might be broken along the row of the reamer bolts B4 and the object of the staggered arrangement is to prevent this breakage.

In Fig. 10, the arrangement of the reamer bolts B4 is asymmetrical in the lateral direction. This is because the arm thickness after fastening is equalized in the lateral direction, based on the shape of the arm section (lens-like shape with its thickness in the lateral direction asymmetrical), for the prevention of breakage due to excessive reduction in thickness on one side.

In order to connect lower arm 5L in the radially outward region of the inner-race-fixed radial bearing BI as described in Fig. 2 - Fig. 6, connection is performed approximately in the same manner as described in Fig. 7-Fig. 10.

While, the lower arm 5L is held between the lower arm connection and bearing support member 8 and arm locking member 89 in the vertical direction in Fig. 2-Fig. 6, the corresponding arm is held between the upper and lower couplings 10, 12 in Fig. 7-Fig. 10.

In this point, both cases are the same. For example, as shown in Fig. 3, the lower arm connection and bearing support member 8 is formed with tapered recesses 87 and the radially innermost portion of the arm of the shape corresponding to the recesses 87 is fitted therein.

Such a construction is the same as that shown in Fig. 8.

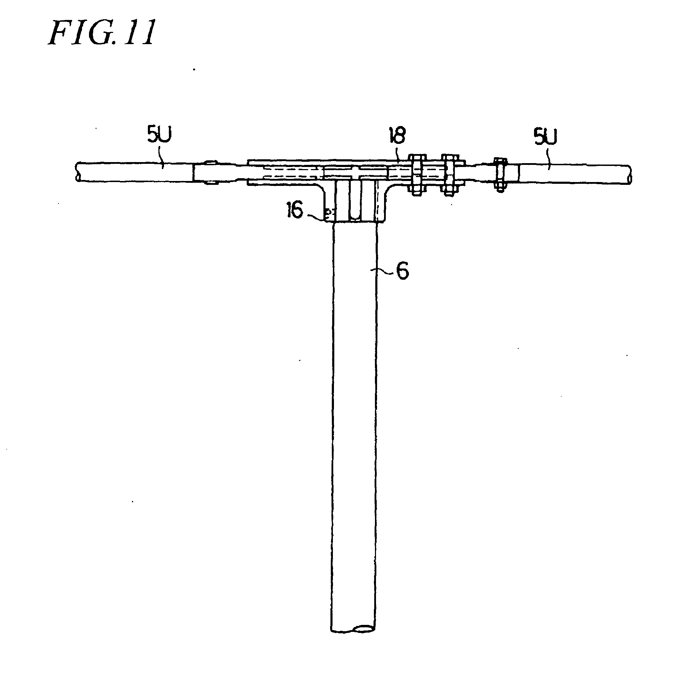

Returning to Fig. 1 and referring to Fig. 11, at the upper end of the rotary shaft 6 (connecting section of the upper arm 5U and rotary shaft 6), unlike the structure shown in Fig. 7, the upper arm 5U is connected by a lower coupling 16 and an upper flat plate-like member 18 (Fig. 11) and there is provided no upper coupling.

The connecting structure of the upper arm 5U at the radially outermost portion, that is, the connecting structure of the upper arm 5U and the blade 4 is different from that described with reference to Fig. 7-Fig. 10.

This is because, in the illustrated embodiment, the material of the rotary shaft 6 is different from that of the arms (5U, 5M, 5L), but the material of the arms (5U, 5M, 5L) and that of the blade 4 are the same (FRP).

Part of the shape of the blade 4 will be described. At the lower end 4e of the blade 4 shown in Fig. 1 is provided an unillustrated drain hole for draining water.

As for the drain hole, a coreless cavity of the hollow blade 4 may be used as it is, or, after closing the lower end of the blade, a hole smaller than the section of the cavity may be formed.

Referring to Fig. 7 again, over the uppermost end 7C of the casing as a non-rotary member is placed a lid-like member 20, and the portion covered with the lid-like member 20 constitutes a labyrinthine structure by the uppermost end 7C of the casing and lid-like member 20.

The lid-like member 20 is fixed to the rotary shaft 6, as a rotary member.

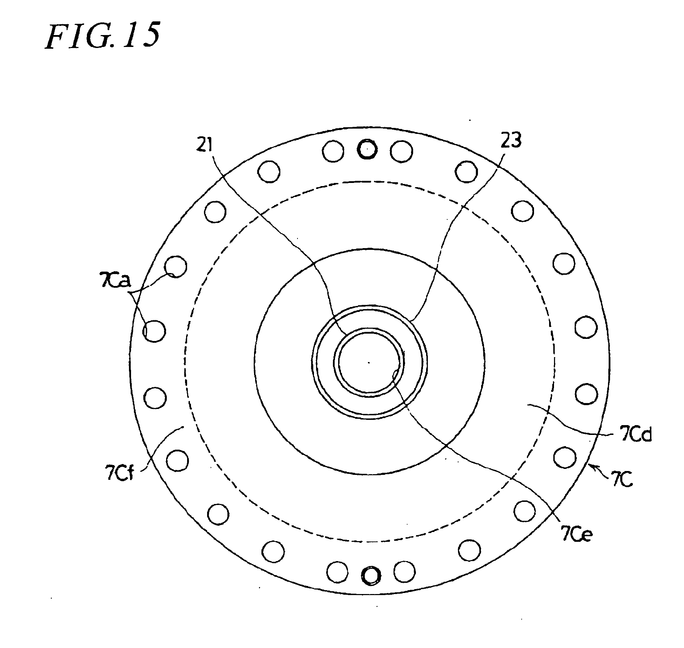

The lid-like member 20 is shown in Fig. 12 and Fig. 13 and the uppermost end 7C of the casing is shown in Fig. 14 and Fig. 15.

The labyrinthine structure will be described with reference to Fig. 7 and Fig. 12-Fig. 15.

First, the uppermost end 7C of the casing, a non-rotary member, will be described with reference to Fig. 14 and Fig. 15.

The casing uppermost end 7C is comprised of: a disk-like flange portion 7Cf having a plurality of mounting holes 7Ca near the outside circumference and a hole portion 7Cb at the center; and a conical roof portion 7Cd, extending on the upper surface of the flange portion 7Cf from the upper end of the hole portion 7Cb obliquely upwardly toward the center and having a hole 7Cc for the rotary shaft to pass.

The rotary shaft through hole 7Cc of the conical roof portion 7Cd is provided, vertically, with an inner cylindrical partition wall 21 with an inside diameter approximately equal to the rotary shaft through hole 7Cc. In addition, to the conical roof portion 7Cd is fixed an outer cylindrical partition wall 23 with a larger diameter than that of the inner cylindrical partition wall 21, disposed concentrically with the inner cylindrical partition wall 21.

Now, the lid-like member 20 as a rotary member will be described in detail with reference to Fig. 12 and Fig. 13.

The lid-like member 20 is comprised of a boss 20b having at the center a fitting hole 20a to be fitted on the rotary shaft, and a conical body 20c extending obliquely downwardly and outwardly from the lower end of the outside circumference of the boss 20b.

In the boss 20b is formed, radially, female screws 20d for bolts for interlocking the lid-like member 20 with the rotary shaft 6.

To the lower surface of the conical body 20c are fixed an inner cylindrical partition wall 22 and an outer cylindrical partition wall 24 both disposed coaxially with the conical body 20c and extending vertically downwardly.

Here, the positional relation of the inner cylindrical partition wall 21 and outer cylindrical partition wall 23 of the casing uppermost end 7C, and the inner cylindrical partition wall 22 and outer cylindrical partition wall 24 of the lid-like member 20 is preferably such that the inner cylindrical partition wall 22 of the lid-like member 20 is positioned approximately in the middle between the inner cylindrical partition wall 21 and outer cylindrical partition wall 23 of the casing uppermost end 7C while the outer cylindrical partition wall 23 of the casing uppermost end 7C is positioned approximately in the middle between the inner cylindrical partition wall 22 and outer cylindrical partition wall 24 of the lid-like member 20, to constitute the labyrinthine structure.

As described above, a labyrinthine structure is adopted in which the casing uppermost end 7C is integrated with the partition walls (inner cylindrical partition wall 21 and outer cylindrical partition wall 23) and the lid-like member 20 as a rotary body is also integrated with the partition walls (inner cylindrical partition wall 22 and outer cylindrical partition wall 24).

Such a labyrinthine structure allows heat generated within the casing during power generation (or in the case of operation as a motor) and heat generated by the rolling friction of the bearings to be released easily and enables prevention of ingress of rainwater.

Returning to Fig. 1, in the casing 7 is provided rotational force-to-power conversion means for converting rotation of the rotary shaft 6 into electric power, or a generator GM. Here, the generator GM is adapted to operate as s motor when a current is supplied to the coil.

The illustrated embodiment is arranged such that, a current (commercial electric power) is supplied to the coil of the generator GM so that the generator is operated as a motor when the wind velocity is not enough to overcome the static rolling resistance.

If the windmill 3 starts rotating, it rotates satisfactorily through the wind velocity as large as to overcome the rolling resistance. If it rotates as fast as to overcome the rolling resistance, the motor may be stopped and operated as a generator.

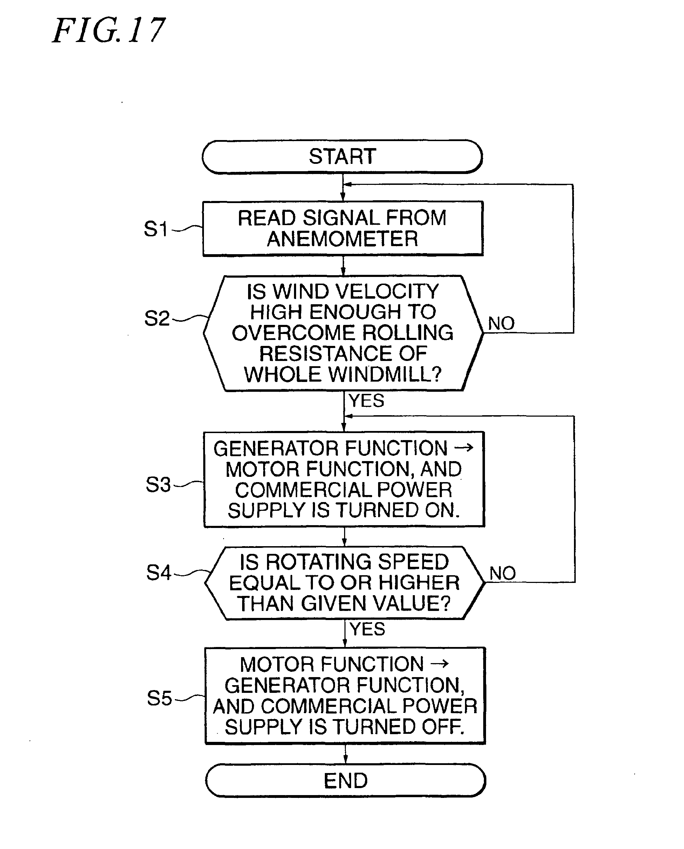

With reference to Fig. 16 and Fig. 17, a control device for the changeover between generator and motor and its control will be described.

The control device for the changeover between generator and motor shown in Fig. 16 has: generator-motor GM for generating electric power through rotational force of the rotary shaft 6 of the vertical shaft windmill 3; a current changeover switch 60 connected to the generator-motor GM via a power line L1; a rectifier 80 connected to the current changeover switch 60 via a power line L2; and a commercial power source (external power) 100 connected to the current changeover switch 60 via a power line L3, and is arranged such that control means 90 receiving an input signal from an anemometer W via an input signal line Li sends an output signal to the current changeover switch 60 via an output signal line Lo in order to change the function of the generator-motor GM to either a generator function or a motor function based on the input signal.

Now, using Fig. 17 and with reference to Fig. 16, a control method for the changeover between generator and motor will be described.

At step S1, the control means 90 reads a signal from the anemometer W, and the procedure proceeds to step S2.

At step S2, the control means 90 judges whether or not the current wind velocity overcomes the rolling resistance of the whole windmill 3. If the wind velocity is large enough to overcome the rolling resistance (YES of step S2), the procedure proceeds to step S3 and if not, the procedure returns to step S1.

At step S3, the control means 90 supplies commercial power from the commercial power source 100 to the generator-motor GM for the changeover switch 60 to be changed from the generator function to the motor function.

At next step S4, the control means 90 judges whether or not the rotating speed of the generator-motor GM is equal to or higher than a given value.

If the rotating speed is equal to or higher than a given value (YES of step S4), the procedure proceeds to next step S5 and if not (NO of step S4), the procedure returns to step S3.

At step S5, the control means 90 sends a control signal to the changeover switch so that the function of the generator-motor GM is changed from the motor function to the generator function, and control comes to an end.

Such an arrangement allows the windmill 3 to rotate for the power generation even when the wind velocity is not so high as to overcome the static rolling resistance. Requirements to utilize the windmill may be moderated to enhance the efficiency (availability) of the windmill 3.

In Fig. 18 (sectional view taken along the line B-B of Fig. 1), a solar battery panel 110 is mounted on the outside circumferential surface of the casing 7 surrounding the unillustrated rotary shaft. Regarding the solar battery panel 110, flexible panels are attached to the casing 7 throughout the outside circumferential surface by means of two stays 120 for each panel. Installation of the solar panel throughout the outside circumferential surface enables photovoltaic power generation irrespective of the position of the sun.

With reference to Fig. 19, another embodiment of this invention will be described, which shows an example of a vertical shaft windmill having generating functions of both photovoltaic power generation and wind power generation. This embodiment is the vertical shaft windmill described in Fig. 16, to which a battery 91 for storing electric power, a solar battery cell 92 for converting solar energy into DC electric power, a controller 93 for controlling the solar battery, and a converter A94 and a converter B95 are added. The controller 93 controls the amount of power generation of the solar battery in particular.

The converters A, B are converters including an active switch. An active switch herein includes electric power semiconductor devices such as a thyristor, a GTO, an MOS, an FET and an IGBT, having the converting function from DC to AC or from AC to DC.

The changeover switch 60 having a multi-switching mechanism is connected to the generator/motor through the converter A94 via the line L1. The changeover switch 60 is also connected to the battery 91 via L4, to the solar battery cell 92 through the controller 93 via the line L2, and to the commercial power source 100 through the converter 95 via the line L3. Also, as described with Fig. 16, the anemometer W is connected to the control means 90 via the signal line Li and the control means 90 is connected to the changeover switch 60 via the output signal line Lo. In such an arrangement, the changeover switch 60 is controlled by the control means 90.

This embodiment is the same as the foregoing embodiment described with Fig. 16 in that the coil of the generator GM is supplied with electric power to make the generator operate as a motor, enabling rotation of the windmill against resistance such as bearing friction even when the wind velocity is relatively low.

It is possible that electric power during operation as a motor is supplied from the commercial power source 100 while electric power is supplied to the commercial power source 100 during operation as a generator. Also, it is possible that, through the operation of the changeover switch 60, electric power is supplied from the battery 91 during operation as a motor, while electric power is stored in the battery 91 during power generation and supplied to an in-house power source (not shown) or the commercial power source 100 as required. Also, it is possible that, through the operation of the changeover switch 60, electric power generated by the solar battery cell 92 is stored in the battery 91 through the controller 93.

Lines from the commercial power source 100 to the converter B95 and from the converter A94 to the generator/motor GM carry a AC, and lines from the converter B95 through the SW 60 to the converter A94 carry an DC. Lines L2, L4 also carry a DC.

As described above, the vertical shaft windmill of an embodiment of this invention is characterized in that the casing (7) extends further upward than the lowest arm (5L), the radial bearing (BI) is fixed to the outer part of the casing (7), and the arm (5L) is mounted for rotation to the casing (7) through the radial bearing (BI) (see Fig. 1-Fig. 5).

In such an arrangement of the embodiment of this invention, since the inner race of the radial bearing (inner-race-fixed radial bearing BI) is mounted on part of the casing (7) as a non-rotary member and the outer race is connected to the arm (5L), the arm (5L) is rotatable relative to the casing (7).

Therefore, even if the casing (7) extends further upward than the lowest arm (5L), interference with the lowest arm (5L) is avoided. As a result of the casing (7) extending further upward than the lowest arm (5L), the overhang is shorter and the windmill (3) is stabilized.

In the embodiment of this invention, cover members (covers 9 for preventing ingress of foreign matters) are preferably disposed radially outwardly at the exterior of the radial bearing (inner-race-fixed radial bearing BI) fixed to the outer part of the casing (7) (see Fig. 1, Fig. 2, Fig. 5 and Fig. 6).

Since the radial bearing (inner-race-fixed radial bearing BI) fixed to the outer part of the casing (7) is exposed to the external environment, that is, directly exposed to the wind and rain, there might occur generation of rust, sticking due to insufficient lubrication and abrasion due to ingress of foreign matter, resulting in a possible loss of accuracy.

To deal with this, the cover members (covers 9 for preventing ingress of foreign matters) are disposed radially outwardly at the exterior of the radial bearing (inner-race-fixed radial bearing BI), so that the foregoing various disadvantages can be prevented.

Here, the cover members (9) are preferably made of material (for example, a metal) of a high weather resistance and a small aging deterioration. The cover members may also be made of plastic materials such as a hard rubber.

Further, a small clearance is preferably provided between the cover member (9) and arm (5L) to avoid contact resistance with the arm (5L). However, if the contact resistance is relatively small (for example, in the case of a diaphragm or a plastic material), the cover member (9) may be in contact with the arm (5L).

Further, the vertical windmill of an embodiment of this invention is characterized in that a recess (10e) having a taper of larger radial inside and smaller radial outside (tapered off radially outwardly) is formed in the arm connection members (the couplings (10, 12) for holding an arm therebeween from above and from below, or the flat plate-like member 18 of Fig. 11) integrated with the respective radial bearings (the radial bearing BR disposed inside the casing 7, and the inner-race-fixed radial bearing BI disposed externally of the casing 7), and the radially inner ends of the arm (5L) are formed in the shape complementary to the recess (10e) (see Fig. 1-Fig. 4, and Fig. 10).

In such an arrangement of this invention, since the recess (10e) of the arm connection members (the couplings (10, 12) for holding an arm therebetween from above and from below, or the flat plate-like member 18 of Fig. 11) and the radially inner end of the arm (5L) are formed in the shape of a taper of larger radial inside and smaller radial outside, even when centrifugal force is exerted on the arm (5L), the taper produces reactive force against the centrifugal force, which prevents the arm (5L) from slipping off from the arm connection members (10, 12).

Further, the vertical shaft windmill of an embodiment of this invention is characterized in that the arm (5L) is formed hollow (preferably in a thin-walled and hollow shape), and a reinforcement member (55M) made from light material (for example, aluminum), with a specific gravity of no higher than 3.0, different from that of the arm (for example, reinforced resin such as FRP) is disposed at the radially inner end (on the side of the rotary shaft) of the arm (5L), partly inserted in the arm (5L) (see Fig. 1 and Fig. 10).

Here, the arm (5L) is preferably made of FRP and has a hollow, thin-walled winglike shape.

The material for the reinforcement member (55M) is not limited to aluminum if it is small in specific gravity and high in tenacity. A metallic material other than aluminum, such as titanium, or other materials with high strength can be used.

In order to dispose such a reinforcement member (55M) at the radially inner end of the arm (5L), the reinforcement member (55M), part of which is inserted in the arm (5L), can be integrated with the arm (5L) satisfactorily only with adhesive in terms of strength. However, for improvement in safety (prevention of separation of the arm 5L and reinforcement member 55M), connection with the reamer bolts (B4) is preferable.

In this case, if the reamer bolts (B4) are disposed in a row, the arm (5L) might be broken if formed thin-walled, so that the reamer bolts (B4) are preferably disposed in a staggered relation for the prevention of arm breakage.

Further, the vertical shaft windmill (3) of an embodiment of this invention is characterized in that a lid-like member (20) covers the uppermost end (7C) of the casing, and a labyrinthine structure is constituted at the portion covered with the lid-like member (20) (Fig. 1, Fig. 7 and Fig. 12-Fig. 15).

Heat produced inside the casing (7) (heat produced in the generator or bearings) need to be released. In addition, since the windmill (3) is installed in the open air, the direct sunlight raises the temperature in the casing (7), so that the need of releasing the heat in the casing (7) is extremely high.

However, if the casing (7) is simply formed with a heat releasing hole, rainwater will enter the casing (7) through the heat releasing hole. That is, in the prior art, it is difficult to release heat produced in the casing (7) while preventing ingress of the rainwater.

On the other hand, in the foregoing arrangement of this invention, a labyrinthine structure is adopted at the portion of the casing at its uppermost end (7C) covered by the lid-like member (20). Such a labyrinthine structure provides a construction in which heat in the casing (7) can be discharged easily and ingress of the rainwater is difficult.

Regarding the labyrinthine structure, vertically upwardly extending partition walls (21, 23) may be formed integrally with the casing at the uppermost end (7C), so that the labyrinthine structure is constituted by both of the partition walls (partition walls 22, 24 of the lid-like member 20 and partition walls 21, 23 of the casing uppermost end 7C).

In an embodiment of this invention, it is preferable that an electric current (for example, commercial power 100) is supplied to the coil of a generator (GM) housed in the casing (7) so that the generator is operated as a motor, when the wind velocity is not so high as to overcome the static rolling resistance.

In such an arrangement, even when the wind velocity is as relatively low as to barely overcome the rolling resistance, the windmill (3) can continue to rotate satisfactorily.

It is preferable that the current supply to the coil is stopped and operation as a motor is terminated to start operation as a generator, when the windmill (3) rotates as fast as to overcome the rolling resistance.

Further, in an embodiment of this invention, a solar battery panel (110) is preferably mounted on the outside circumferential surface of the casing (7) (preferably throughout the circumference). In this case, the solar battery panel (110) is preferably flexible. This is because stable solar generation can be expected irrespective of the position of the sun with such a panel (110).

The embodiments shown in the figures are essentially illustrative and not intended to limit the scope of this invention.

For example, while only a Darius type windmill has been described in the illustrated embodiment, this invention can be applied to a Savonius type windmill or other vertical shaft windmills.

### Industrial Applicability

According to the vertical shaft windmill of the embodiment described above,
(a) since the inner race of a radial bearing is pmounted in a casing as a non-rotary member while the outer race is connected to an arm, the arm is rotatable relative to the casing. Therefore, the casing is allowed to extend further upward than the lowest arm and thus the overhang becomes shorter, and the windmill is stabilized;
(b) since cover members are disposed radially outwardly at the exterior of the radial bearing, direct exposure to wind and rain is avoided. It prevents disadvantages of generation of rust, sticking due to insufficient lubrication, abrasion due to ingress of foreign matters, and the like;
(c) since a recess of an arm connection member and a projection of an arm at its radially inner end are in the shape of a taper of larger radial inside and smaller radial outside, if centrifugal force is exerted on the arm, the taper produces reactive force against the centrifugal force, with the recess and the projection meshing with each other, which prevents the arm from slipping off from the arm connection member;
(d) since an arm body is made of FRP and formed in a hollow, thin-walled winglike shape, for example, and an aluminum reinforcement member, for example, is disposed at the radially inner end of an arm, a structure is materialized which is low in price, short in delivery time and satisfactory in terms of weight and strength. That is, a windmill is materialized having a required strength, and being light in weight and high in power generating efficiency;
(e) since a labyrinthine structure is adopted in which vertically upwardly extending partition walls are formed integrally with the casing at the uppermost end, while vertically downwardly extending partition walls are formed integrally with a lid-like member covering the uppermost end and the partition walls of both members are disposed radially alternately with each other, a structure can be provided in which heat in the casing is discharged easily and ingress of rainwater is difficult;
(f) since an electric current (for example, commercial power) is supplied to the coil of a generator housed in the casing so that the generator is operated as a motor when the wind velocity is not so high as to overcome the static rolling resistance, the windmill can continue to rotate satisfactorily even when the wind velocity is as relatively low as to barely overcome the rolling resistance; and
(g) since a solar battery panel is mounted on the outside circumferential surface (preferably throughout the circumference) of the casing enclosing the rotary shaft, stable photovoltaic power generation can be expected irrespective of the position of the sun.

## Claims

1. A vertical shaft windmill comprising:
a blade for receiving a wind to obtain rotational force;
a plurality of arms disposed in vertical relation for supporting the blade;
a rotary shaft disposed vertically for receiving the rotational force of the blade through the arms;
a casing for housing the rotary shaft, extending further upward than a lowest arm of the plurality of arms; and
a radial bearing fixed to an outer part of the casing for rotatably mounting the lowest arm to the casing.

2. The vertical shaft windmill as recited in claim 1, further comprising a cover member disposed radially outwardly at an exterior of the radial bearing.

3. The vertical shaft windmill as recited in claim 1 or 2, further comprising an arm connecting member placed between the radial bearing and the arms and formed with a recess having a taper of larger radial inside and smaller radial outside,
wherein radially inner end of the arm is formed in a shape complementary to the recess.

4. The vertical shaft windmill as recited in any one of claims 1-3,
wherein the arm is formed hollow and comprise a reinforcement member made of a light material, with a specific gravity of no larger than 3.0, different from that of the arm, the reinforcement member being disposed at the radially inner end of the arm, partly inserted in the arm.

5. The vertical shaft windmill as recited in any one of claims 1-4, further comprising a lid-like member covering an uppermost end of the casing,
wherein a labyrinthine structure is constituted at a portion covered with the lid-like member.

6. The vertical shaft windmill as recited in any one of claims 1-5, further comprising a generator driven by the rotational force of the rotary shaft,
wherein the rotary shaft is constituted integrally with a rotary shaft of the generator.

7. The vertical shaft windmill as recited in claim 6, further comprising a solar battery panel mounted on an outside circumference of the casing.

8. The vertical shaft windmill as recited in claim 6 or 7,
wherein the generator is adapted to operate also as a motor.

9. The vertical shaft windmill as recited in claim 8,
wherein the generator is adapted to: supply electric power to a commercial power source when operating as a generator; and be supplied with electric power from the commercial power source when operating as a motor.

10. The vertical shaft windmill as recited in claim 8, further comprising a battery for storing electric power,
wherein the generator is adapted to: be supplied with electric power from the battery when operating as a motor; and store electric power in the battery so as to supply electric power from the battery to a commercial power source or as in-house electric power, as required, when operating as a generator.
